Europäisches Patentamt

European Patent Office

Office européen des brevets

(19)

(11) EP 0 460 997 B1

(12) # FASCICULE DE BREVET EUROPEEN

(45) Date de publication et mention
de la délivrance du brevet:
**16.09.1998 Bulletin 1998/38**

(51) Int Cl.6: **G06T 7/20**

(21) Numéro de dépôt: **91401373.5**

(22) Date de dépôt: **29.05.1991**

(54) **Procédé d'estimation hiérarchique du mouvement dans une séquence d'images**

Hierarchisches Bewegungsabschätzungsverfahren in einer Bildsequenz

Hierarchical movement estimation process in an image sequence

(84) Etats contractants désignés:
**AT BE CH DE DK ES FR GB GR IT LI LU NL SE**

(30) Priorité: **06.06.1990 FR 9007022**

(43) Date de publication de la demande:
**11.12.1991 Bulletin 1991/50**

(73) Titulaire: **THOMSON multimedia
92648 Boulogne Cédex (FR)**

(72) Inventeurs:
• **Chupeau, Bertrand
F-92045 Paris la Défense (FR)**
• **Pecot, Michel
F-92045 Paris la Défense (FR)**

(74) Mandataire: **Ruellan-Lemonnier, Brigitte et al
THOMSON multimedia,
46 quai A. Le Gallo
92648 Boulogne Cédex (FR)**

(56) Documents cités:
• **PROCEEDINGS OF THE CONFERENCE ON COMPUTER VISION AND PATTERN RECOGNITION Juin 1983, WASHINGTON pages 246 - 252; P.J. BURT ET AL.: 'Muti-resolution flow-through motion analysis '**
• **PROCEEDINGS OF THE CONFERENCE ON COMPUTER VISION AND PATTERN RECOGNITION Juin 1986, MIAMI BEACH pages 219 - 226; L.R. WILLIAMS ET AL.: 'a coarse-to-fine control strategy for stereo and motion on a meshconnected computer '**
• **PROCEEDINGS OF THE CONFERENCE ON COMPUTER VISION AND PATTERN RECOGNITION Juin 1983, WASHINGTON pages 432 - 441; F. GLAZER: 'Scene matching by hierarchical correlation '**
• **PROCEEDINGS OF THE EUSIPCO-88 ,FOURTH EUROPEAN SIGNAL PROCESSING CONFERENCE Septembre 1988, GRENOBLE pages 246 - 250; J.A.M. STUIFBERGEN ET AL.: 'Hierarchical estimation of spatio-temporal intensity changes in images '**

**Description**

La présente invention concerne une procédé d'estimation hiérarchique du mouvement dans une séquence d'images basée sur la décomposition du spectre des images en sous bandes.

Les algorithmes classiques d'estimation de mouvement travaillant directement sur les images et basés sur des techniques de corrélation ou de gradient ne donnent pas de résultats satisfaisants dans le cas de grands mouvements ainsi que dans les zones uniformes des images. Le calcul des champs de déplacement par codage hierarchique, tel que décrit par exemple dans l'article IEEE de Frank Glazer (conférence à Washington, juin 83) intitulé "Scene Matching by Hierarchical Correlation", exploite une structure monopyramidale ne permettant pas d'obtenir une bonne précision relativement au coût du calcul. Par ailleurs, le mouvement des détails fins des images est généralement très mal rendu.

Le but de l'invention est de pallier les inconvénients précités.

A cet effet, l'invention a pour objet, un procédé d'estimation hiérarchique du mouvement dans une séquence d'images caractérisé en ce qu'il consiste à effectuer une décomposition hiérarchique de l'image par niveaux de résolutions, à estimer un mouvement au niveau de résolution le plus grossier et à affiner l'estimation dans chaque niveau au fur et à mesure que la résolution augmente.

L'invention a pour principal avantage qu'elle permet de calculer un champ de vecteurs déplacement entre deux images successives d'une séquence. Ce champ peut être défini pour chaque pixel de l'image, avec une précision de déplacement inférieure à 1 pixel. De plus avec l'apport de deux pyramides d'images hautes fréquences à résolutions croissantes il permet de restituer le mouvement de détails fins de l'image, qui disparaîtrait dans une simple estimation monopyramidale basse fréquence.

Le procédé selon l'invention a également pour avantage de pouvoir être utilisé dans tous les dispositifs de traitement d'images nécessitant un champ de mouvement proche du champ réel tels que les dispositifs de codage par compensation de mouvement dans le cadre par exemple des applications de télévision haute définition, ou encore les dispositifs de conversion de standard 50HZ/60HZ, de désentrelacement de trames ou de conversion 50HZ/100HZ.

D'autres caractéristiques et avantages de l'invention apparaîtront ci-après à l'aide de la description qui suit faite en regard des dessins annexés qui représentent.

- la figure 1, une pyramide multi résolution ;
- la figure 2, une décomposition d'image en sous bandes ;
- la figure 3, un mode de réalisation d'une cellule élémentaire de décomposition d'une image en sous bandes ;
- la figure 4, un mode de réalisation d'une cellule élémentaire de reconstitution d'image à partir de ses sous bandes.
- la figure 5, une découpe du spectre de l'image suivant trois itérations successives.
- la figure 6, un arbre de décomposition d'image obtenu à partir d'une cascade de trois cellules élémentaires.
- la figure 7, une structure tripyramidale obtenue pour quatre niveaux de résolution.
- la figure 8, un vecteur mouvement représenté entre deux images successives.
- les figures 9 et 10, deux exemples de projection de vecteurs déplacement d'une image de résolution grossière vers une image de résolution plus fine.
- la figure 11, une illustration des choix possibles entre vecteurs déplarecement proposés.
- la figure 12, un exemple de fusion d'estimations obtenus sur les pyramides haute fréquence pour le calcul de l'estimation sur la pyramide basse fréquence.
- la figure 13, une illustration de l'algorithme de traitement mis en oeuvre par le procédé selon l'invention.
- la figure 14, une courbe d'interpolation permettant d'estimer les champs de mouvement avec une précision inférieure au pixel.

Selon l'invention l'analyse du mouvement dans une séquence d'images a lieu de façon hiérarchique. Elle consiste à estimer d'abord un mouvement à un niveau de résolution grossier de l'image, puis à affiner cette estimation au fur et à mesure que la résolution des images traitées augmente.

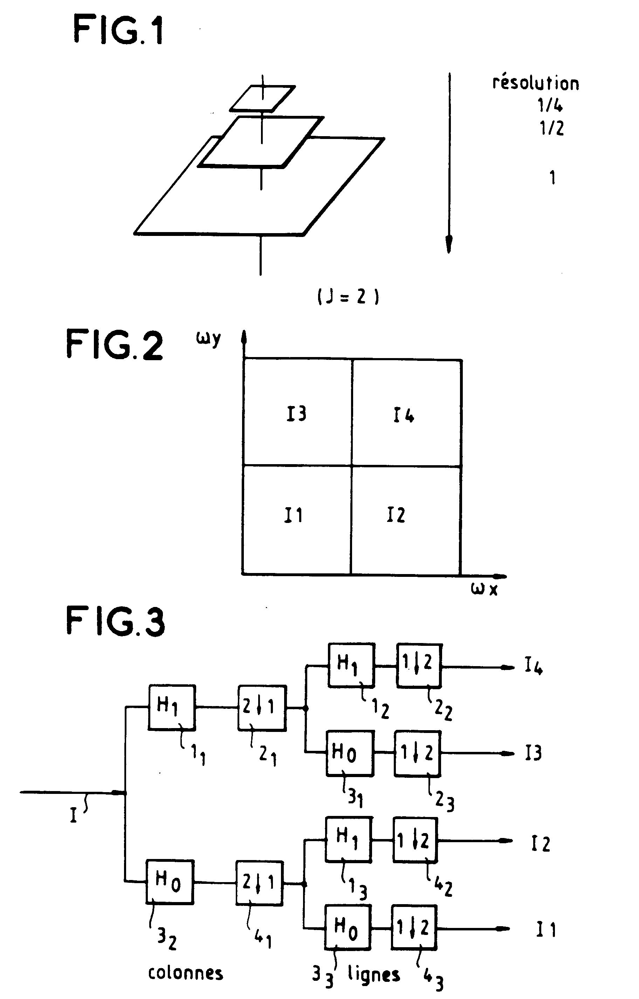

La figure 1 décrit une pyrapide multirésolution d'images, composée d'un ensemble d'images de résolution $2^{-f}$ où jappartient à l'intervalle [ o,j ], l'image pleine résolution correspondant à j=o. Ainsi, l'estimation faite à un niveau de résolution $2^{-j}$ sert d'initialisation à l'estimation faite au niveau de résolution supérieur $2^{-(j-1)}$. L'invention utilise 3 telles pyramides multirésolution, une pyramide d'images basses fréquences et 2 pyramides d'images hautes fréquences. Ces trois pyramides sont obtenues naturellement en utilisant une décomposition hiérarchique en sous-bandes des images.

Un mode de découpe du spectre d'une image est représenté à la figure 2, suivant quatre bandes de fréquence $I_1$, $I_2$, $I_3$ et $I_4$, représentés dans un repère orthonormé à deux dimensions, comportant deux axes $\omega_x$ et $\omega_y$ sur lesquels sont portés respectivement les fréquences spatiales $\omega_x$ et $\omega_y$ mesurées respectivement en cycles par largeur d'image et hauteur d'image.

La bande $I_1$ correspond au domaine des basses fréquences et les trois autres bandes $I_2$, $I_3$ et $I_4$ correspondent à

celui des hautes fréquences. Un tel découpage peut par exemple être obtenu au moyen d'une cellule de découpe organisée de la manière représentée à la figure 3. Cette cellule comporte un premier ensemble de filtres $(H_1)$ passe haut monodimensionnels référencés $(1_1, 1_2$ et $1_3)$ couplés à des circuits déciminateur par deux $(2_1, 2_2$ et $2_3)$ et un deuxième ensemble de filtres $(H_o)$ passe bas monodimensionnels $(3_1, 3_2$ et $3_3)$ couplés à des circuits décimateur par deux $(4_1, 4_2$ et $4_3)$. Les filtres $1_1$ et $3_2$ opèrent respectivement un premier filtrage suivant les colonnes de l'image I appliquée sur leur entrée.

Les filtres $1_2$ et $3_1$ opèrent un filtrage suivant les lignes de l'image sur les points déjà filtrés et décimés par deux par le filtre passe haut $1_1$ et le décimateur $2_1$. Les filtres $1_3$ et $3_3$ opèrent un filtrage suivant les lignes de l'image sur les points déjà filtrés et décimés par deux par le filtre passe bas $3_2$ et le décimateur $4_1$. Les sorties des filtres $3_3, 1_3, 3_1$ et $1_2$ sont à leur tour décimés par deux pour former respectivement la décomposition de l'image initiale I en les quatre sous bandes $I_1, I_2, I_3$ et $I_4$ de la figure 2.

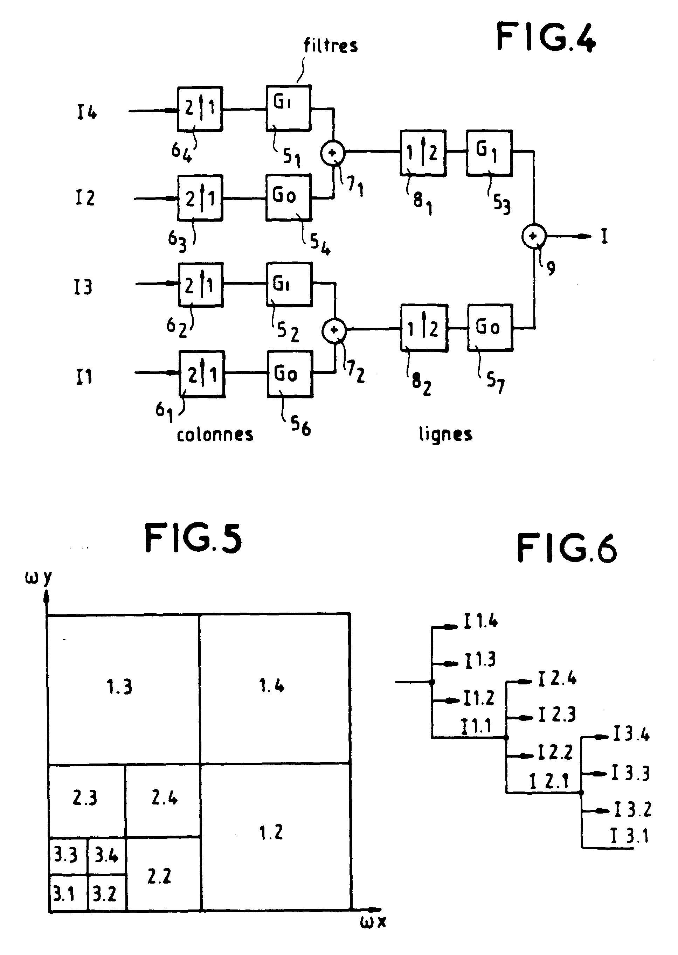

La reconstruction de l'image I à partir des images partielles $I_1, I_2, I_3$ et $I_4$ peut être obtenue de la manière représentée à la figure 4 au moyen de filtres $(G_1)$ $5_1$ à $5_3$ et de filtres $(G_o)$ $5_4, 5_6$ et $5_7$ de fonction de transfert défini dans le plan complexe de la variable complexe Z par les relations :

$$G_o (Z) = 2 H_1 (-Z) / D (Z) \tag{1}$$

$$G_1 (Z) = -2 H_o (-Z) / D (Z) \tag{2}$$

où

$$D (Z) = H (Z). H_1 (-Z) - H_o (-Z). H_1 (Z) \tag{3}.$$

Sur la figure 4 les éléments d'image obtenus dans les sous bandes $I_1, I_2, I_3$ et $I_4$ sont appliqués respectivement aux entrées des filtres $5_6, 5_2, 5_4$ et $5_1$ aux travers de suréchantillonneurs par 2 référencés respectivement de $6_1, 6_4$.

Les sorties des filtres $5_1, 5_4$ d'une part et $5_2, 5_6$ d'autre part, sont couplées respectivement aux circuits additionneurs $7_1, 7_2$. Les sorties des circuits additionneurs $7_1, 7_2$ sont couplés respectivement aux filtres $5_5, 5_7$ au travers respectivement de sur échantillonneurs $8_1, 8_2$. L'image résultante I est obtenue à la sortie d'un circuit additionneur (9) couplé respectivement aux sorties des filtres $5_5, 5_7$.

Les filtres $G_o$ et $G_1$ décrits par les formules (1) et (2) permettent une reconstruction parfaite de l'image originale quelque soit les filtres $H_o$ et $H_1$. Néanmoins, il est préférable, pour des raisons de stabilité numérique en arithmétique finie, d'utiliser des filtres à réponse impulsionnelle finie RIF. De plus, les filtres à réponse impulsionnelle finie RIF peuvent être construits avec une phase linéaire mieux adaptée au traitement d'images, en particulier lorsque les images filtrées correspondant aux résolutions intermédiaires présentent de l'intérêt. Dans ces conditions les filtres de reconstruction doivent avoir des fonctions de transfert définies comme suit :

$$G_o (Z) = 2 H_1 (-Z) \tag{4}$$

et

$$G_1 (Z) = -2 H_o (-Z) \tag{5}$$

les relations (4) et (5) ont pour avantage de supprimer le repliement interbande.

La condition de reconstruction parfaite de l'image originale s'écrit alors : $D (Z) = Z^L$.

A titre indicatif, il pourra être utilisé pour réaliser les filtres $H_o$ et $H_1$ des filtres connus sous les abréviations "QMF" ou "CQF" de "Quadrature Miror Filter" ou "Conjugate Quadrature Filter" dont des descriptions peuvent être trouvées dans les articles :

- de M. J. D. Johnston ayant pour titre "Filter family design for use in quadrature miror filter" et publié dans Proceeding ICAST 1980 pages 291-294 ;

   ou de M. K. J. Smith et TP Barnwell ayant pour titre "Exact reconstruction technics for tree structured subband codors" publié dans la revue IEEE ASSP vol.34 n°3 juin 86 ;
ou encore dans la thèse de M. C. Galand ayant pour titre "Codage en sous bande, théorie et application à la compression numérique du signal de parole". Nice 1983.

L'agencement des cellules élémentaires de décomposition du type de celles décrites aux figures 3 et 4 présente l'avantage qu'il permet des découpages de spectre suivant des formes très variées. Une découpe hiérarchique du spectre est utilisée pour l'estimateur de mouvement.

Un exemple utilisant trois cellules de découpe est représenté à la figure 5 et l'arbre de décomposition correspondant est montré à la figure 6.

Cette décomposition fournit directement trois pyramides d'images hautes fréquences de résolution croissante.

Sur la figure 5 les images hautes fréquences s'étendant dans la direction de l'axe horizontal des fréquences X de l'image sont formées par les blocs 3.2 - 2.2 et 1.2. Les images hautes fréquences s'étendant dans la direction de l'axe vertical des fréquences Y sont formées par les blocs 3.3 - 2.3 et 1.3 et les images hautes fréquences selon les directions X et Y sont formées par les blocs 3.4 - 2.4 et 1.4.

Chacune met en relief un type donné des détails de l'image en particulier les contours verticaux pour la première, les contours horizontaux pour la seconde.

Seules ces deux premières pyramides sont utilisées efficacement pour l'estimation du mouvement : la première servant à mettre en évidence le mouvement horizontal des contours verticaux de l'image, la seconde, le mouvement vertical des contours horizontaux de l'image. La troisième pyramide n'est pas retenue par le fait que la nature des images qui la composent est généralement trop bruitée.

La décomposition des figures 5 et 6 permet également de fournir une pyramide d'images basses fréquences composée des blocs $I_{31}$, $I_{21}$, $I_{11}$ et I s'il est retenu à chaque étage l'image $I_1$ de la figure 2 issue du filtrage passe bas des lignes et des colonnes et d'un sous-échantillonnage par 2.

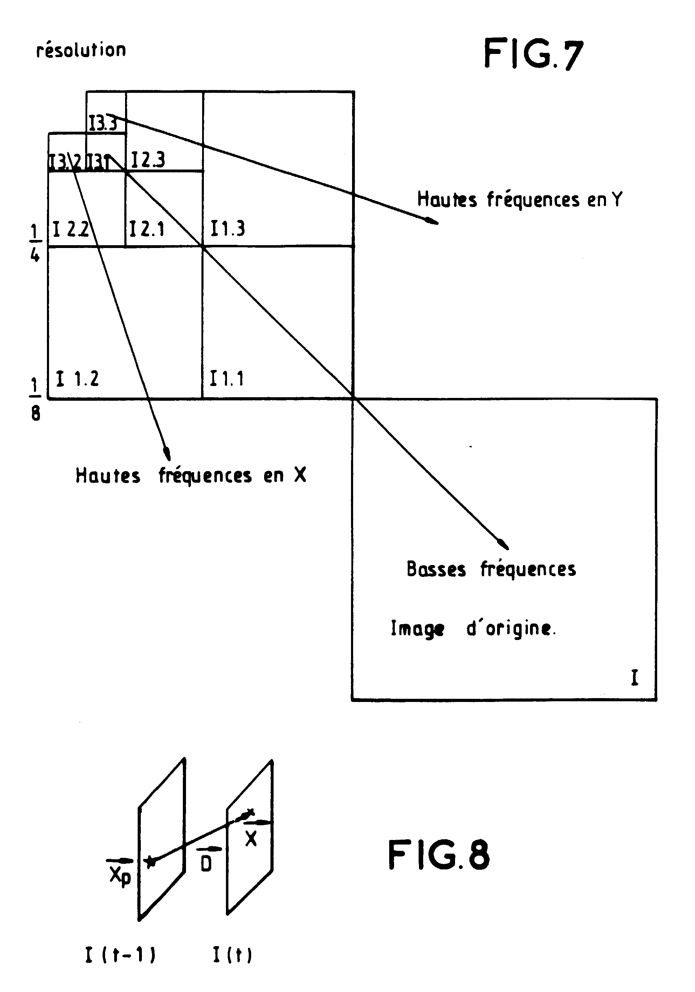

Une structure tripyramidale correspondante pour quatre niveaux de résolution est représentée à la figure 7. Cette structure montre qu'il y a toujours à chaque niveau de résolution trois images, une image basses fréquences, une image hautes fréquences suivant l'axe horizontal et une image hautes fréquences suivant l'axe vertical.

La détermination du champ de mouvement a lieu par un calcul d'estimation hiérarchique sur ces trois pyramides. Il s'agit comme le montre la figure 8 pour chaque pixel X = (i,j) d'une image courante I(t) de déterminer le pixel Xp= (i'-j') correspondant dans l'image précédente I(t-1). Le vecteur mouvement $\vec{D}$ (X) est défini par :

$$D = (i'-i, j'-j)$$

et est tel que :

$$I (t-1, Xp) = I (t, X)$$

Le principe général de l'estimateur de mouvement peut être décrit comme suit : 3 estimations hiérarchiques sont menées en parallèle sur les 3 pyramides. Les 2 estimations obtenues sur les pyramides hautes fréquences ne servent qu'à enrichir à chaque niveau de résolution l'estimation obtenue sur la pyramide basse fréquence (qui constitue l'information réellement utile). Ceci se fait par fusion de l'information obtenue sur les 3 pyramides à chaque niveau de résolution, l'estimation résultante étant attribuée à la pyramide basse fréquence.

Chaque estimation hiérarchique procède de la manière suivante :

Le déplacement calculé, au point correspondant sur l'image au niveau de résolution inférieur sert de prédiction à l'estimation au niveau de résolution supérieur.

Si $\vec{D}_2$ -(j+1) désigne le vecteur calculé sur une image de résolution $2^{-(j+1)}$, et $\vec{D}_2$-j désigne le vecteur à calculer sur l'image à la résolution courante $2^{-j}$, $\vec{D}_2$-j est alors donné par :

$$\vec{D}_2\text{-j} = 2 \times \vec{D}_2 \text{-(j+1)} + d\vec{D}$$

Cela revient à estimer le vecteur $d\vec{D}$, qui représente une petite variation autour de la prédiction la quelle est égale à deux fois le vecteur estimé au niveau de résolution précédent étant donné le facteur de sous échantillonnage.

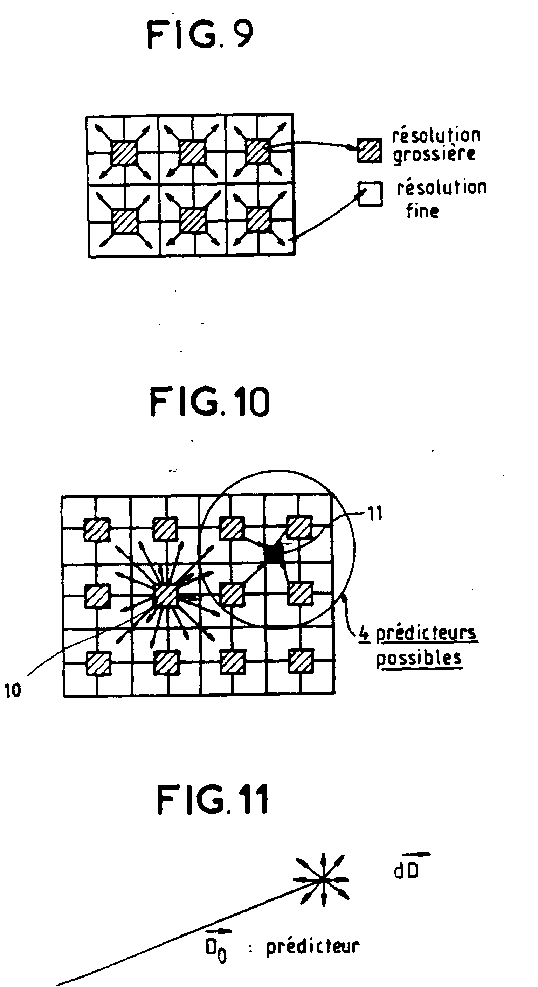

En première approximation, comme montré sur la figure 9, le mouvement d'un point situé au niveau inférieur peut être utilisé comme possible initialisation du mouvement des 4 points au niveau de résolution considéré.

Néanmoins, une telle approche n'offre qu'une seule initialisation (ou prédiction) possible pour l'estimation du mouvement en chaque point du niveau considéré.

Il paraît plus réaliste de projeter l'estimation obtenue à un niveau inférieur sur 16 points l'entourant au niveau de résolution supérieur. Comme le montre la figure 10 on dispose alors de quatre prédicteurs possibles en chaque point de ce niveau au lieu d'un seul, ce qui ne peut qu'améliorer l'estimation. Pour le point 10 sur cette figure sa contribution comme prédicteur est apportée à 16 points du niveau de résolution plus fin et le point 11 de niveau fin utilise comme prédiction 4 points du niveau grossier. On autorise à chaque niveau de résolution une correction de ±1 pixel autour du prédicteur.

Comme le montre la figure 11, cela revient à tester 9 vecteurs possibles autour de 4 vecteurs de prédiction $\vec{D}_o$ en limitant l'excursion du vecteur $d\vec{D}$ à ± 1 pixel en X et en Y.

Cette limitation de l'excursion du vecteur $d\vec{D}$ à ± 1 pixel fixe l'amplitude maximale du mouvement à estimer. Naturellement en considérant N niveaux de décomposition, à 1 pixel au niveau de résolution k, correspond $2^{k-1}$ pixels sur l'image originale (soit le niveau 1). En choisissant le prédicteur nul au niveau le plus grossier k, le mouvement maximal estimé en sortie de la pyramide devient :

$$\sum_{k=0}^{N-1} 2^k = \| \vec{D}_{max} \|$$

Ceci correspond par exemple à une amplitude maximum de mouvement de 31 pixels pour une décomposition à 5 niveaux.

A un niveau de résolution donné, on dispose en chaque point de 4 prédicteurs possibles qui engendrent chacun, comme le montre la figure 11, neuf vecteurs possibles. Le choix du vecteur mouvement au point considéré doit donc être fait parmi 36 vecteurs. Le vecteur choisi est celui qui minimise l'erreur de recalage sur une fenêtre de 3 x 3 pixels centrée sur le point considéré.

En désignant par $I_t$ l'image courante,
$I_{t-1}$ l'image précédente
et par $\vec{D}_x = (U, V)$ le vecteur déplacement testé par le point x de coordonnées (i,j) l'erreur de recalage est donnée par la différence inter images déplacées

$$DFD(\vec{X}, \vec{D}) = (I_{(t-1,j+k-u(\vec{X}), j+l-V(\vec{X})} - I_{(t, i+k,j+l)})^2$$

k = -1,1
l = -1,1

Le vecteur déplacement D choisi est celui qui donne la différence inter image déplacée DFD (X,D) la plus faible.

Cependant lorsque l'estimation a lieu dans une zone uniforme de l'image, et donne des valeurs nulles pour les différences inter image déplacées DFD (X,D) quelque soit le vecteur proposé, le critère précédant n'est alors plus pertinent et il y a alors un risque de divergence de l'algorithme.

Ceci est résolu en effectuant un test sur la différence existante entre la valeur minimale de l'ensemble des différences inter image déplacées DFD (X,D) et la valeur maximale.

Si cette différence est trop faible, il est choisi de conserver toujours le même prédicteur parmi les quatre prédicteurs possibles. De telles estimations précédentes ont lieu de façon indépendante sur les deux pyramides hautes fréquences précédemment décrites.

Pour l'estimation sur la pyramide basses fréquences, à chaque niveau de résolution le champ de mouvement estimé est enrichi par la fusion des informations de détails provenant des hautes fréquences.

Comme les images hautes fréquences sont majoritairement à zéro excepté sur les contours des objets seuls les mouvements estimés sur ces contours sont intéressants pour affiner le mouvement estimé sur la pyramide basses fréquences, et les informations sur les zones bruitées des images hautes fréquences ne sont pas prises en compte. Ceci est obtenu en fixant un seuil de pertinence sur les images hautes fréquences, avant de retenir le mouvement calculé correspondant.

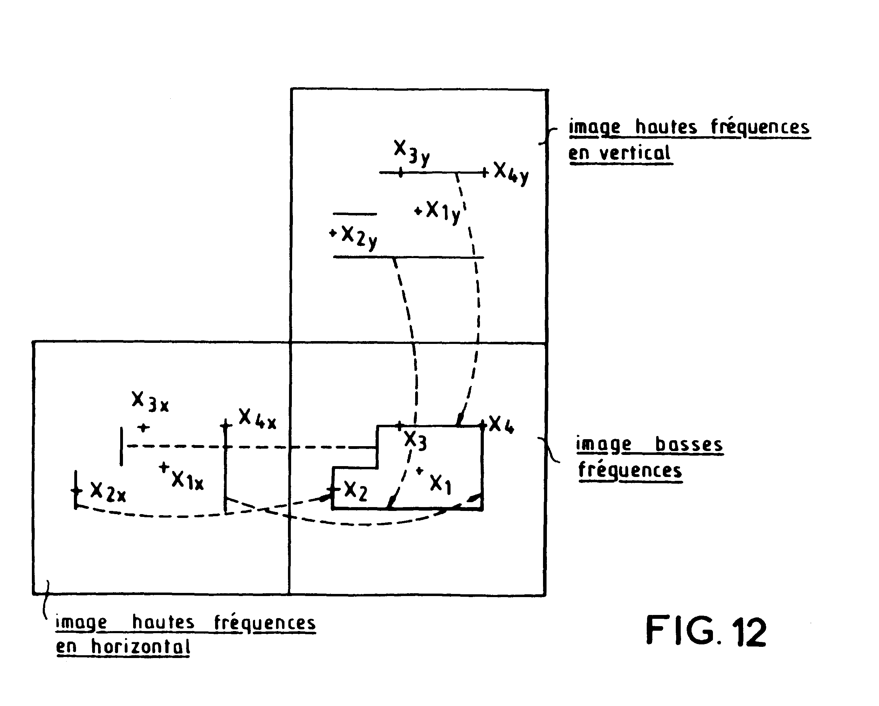

Ce seuil est fixé en fonction de la variance V de la sous bande considérée. Un point d'une sous bande haute fréquence est dans ces conditions pris en compte si la valeur absolue de la luminance est supérieure à $K^V$ en ce point. Il est à noter que les sous bandes hautes fréquences sont à moyenne nulle. Un exemple de fusion est représenté à la figure 12. Sur cette figure à chaque point $X_i$ de l'image basse fréquence correspond des points $X_{ix}$ et $X_{jy}$ sur les images hautes fréquences en X et en Y.

Quatre cas de figures sont à considérer dépendant du fait que le seuil peut être atteint dans l'une ou plusieurs des quatre bande d'images.

Dans un premier cas, si le seuil n'est pas atteint ni en X ni en Y, cela signifie qu'il n'y a pas d'information sur les hautes fréquences et le mouvement qui est pris en considération est celui estimé sur les basses fréquences.

Dans un deuxième cas où le seuil est atteint en $X_X$ et pas en $X_y$ le choix est effectué entre deux vecteurs déplacement possibles, l'un : $\vec{D}_{BF} = (U_{(X)}, V_{(X)}$ estimé sur les basses fréquences, l'autre : $\vec{D}_{HF} = (U_{(Xx)}, V_{(X)})$ dont la composante en X est estimée sur les hautes fréquences.

Dans un troisième cas où le seuil est atteint en $X_y$ et pas en $X_x$ le choix est effectué entre deux vecteurs déplacement, l'un :

$\vec{D}_{BF} = (U_{(X)}, V_{(X)})$ estimé sur les basses fréquences,

et l'autre : $\vec{D}_{HF} = (U_{(X)}, V_{(Xy)})$ dont la composante en Y est estimée sur les hautes fréquences.

Enfin, suivant un quatrième cas où le seuil est atteint en $X_x$ et en $X_y$ le choix est effectué entre quatre vecteurs.

Un premier : $\vec{D}_{BF} = (U_{(X)}, V_{(X)})$ estimé sur les basses fréquences,

un deuxième : $\vec{D}_{HF1} = (U_{(Xx)}, V_{(X)})$ dont la composante en X est estimée sur les hautes fréquences,

un troisième : $\vec{D}_{HF2} = (U_{(X)}, V_{(Xy)})$ dont la composante en Y est estimée sur les hautes fréquences,

et un quatrième : $\vec{D}_{HF3} = (U_{(Xx)}, V_{(Xy)})$ dont la composante est estimée sur les hautes fréquences en X et Y.

Dans tous les cas le vecteur choisi est celui que minimise l'erreur de recalage sur l'image basses fréquences.

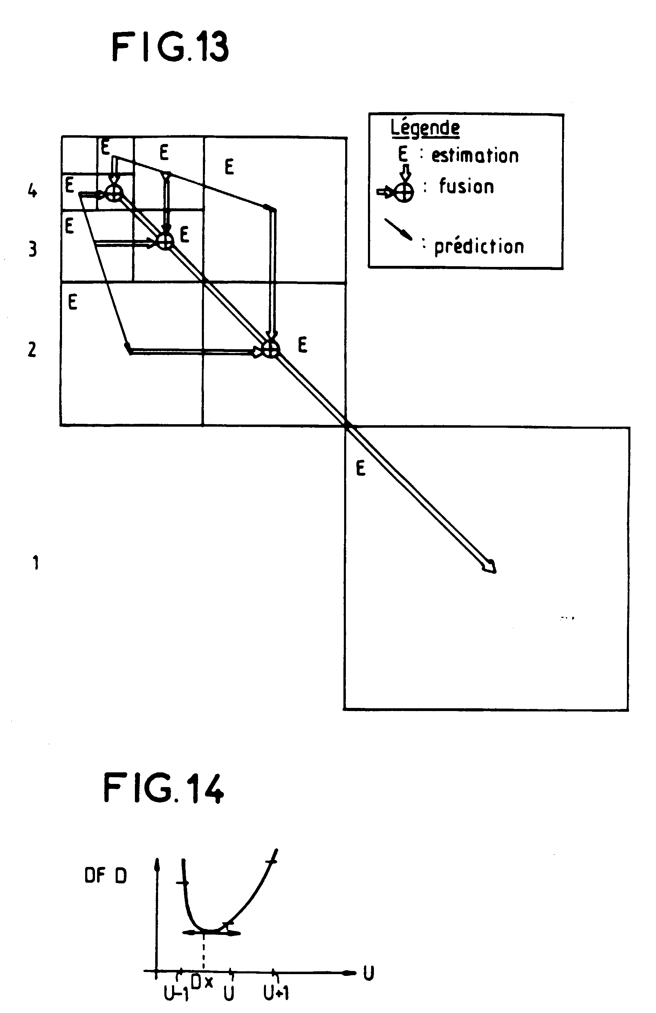

Ainsi, l'estimation sur la pyramide basses fréquences prend en compte à chaque niveau les estimations sur les images de détails au même niveau. Ce champ fusionné est ensuite utilisé comme montré à la figure 13 comme prédicteur de l'estimation au niveau suivant.

Ainsi, à chaque niveau de résolution 2, 3 et 4 représenté sur la figure 13 une estimation dans chaque sous bande est effectué avec en prédiction l'estimation dans la même sous bande ou niveau précédent et une fusion est effectuée des trois estimations reportées dans la sous bande basses fréquences.

L'estimation au niveau 1 est effectuée dans l'image originale avec pour prédiction de la fusion des estimations au niveau 2.

Naturellement la précision de l'estimation à 1 pixel issue du dernier niveau de résolution du champ de mouvement peut encore être améliorée en interpellant par exemple l'image source avec 2 ou 4 etc. ou plus de points en X et en Y pour obtenir des précisions d'estimations de 1/2, 1/4 etc $1/2^K$ pixels. Mais comme cette solution peut devenir rapidement très coûteuse, il paraît préférable d'utiliser une méthode d'interpolation rapide consistant à rechercher le minimum de chaque différence inter image déplacée DFD en fonction d'une des deux variables U et V, l'autre restant constante comme ceci est représenté à la figure 14, où la courbe DFD est tracée à V constant.

Le tracé est effectué pour trois valeurs de U (U-1, U et U+1). La parabole ainsi obtenue présente un minimum d'abscisse correspondante $D_x$ qui est la composante en X du déplacement. La même opération peut être effectuée dans la direction Y de l'image ou obtient ainsi un vecteur déplacement D réel = $(D_x, D_y)$ avec une précision inférieure au pixel.

Cette méthode est en effet très rapide car le critère DFD (U,V) est calculé pour les 9 vecteurs voisins du vecteur choisi lors du choix. Dans le pire des cas, où le vecteur choisi est sur l'un des coins du carré de pixels représenté, il n'y a que deux valeurs de DFD (D) à calculer pour effectuer l'interprétation par la parabole. Par contre il n'y a aucune valeur à calculer s'il est au centre et une seule valeur à calculer pour les autres points.

## Revendications

1. Procédé d'estimation hiérarchique du mouvement dans une séquence d'images de type consistant à effectuer une décomposition hiérarchique de l'image par niveaux de résolutions ($I_{31}$, $I_{32}$, $I_{33}$ ; $I_{21}$, $I_{22}$, $I_{23}$ ; $I_{11}$, $I_{12}$, $I_{13}$ ; I), à estimer un mouvement au niveau de résolution le plus grossier ($I_{31}$, $I_{32}$, $I_{33}$) et à affiner l'estimation dans chaque niveau au fur et à mesure que la résolution augmente, caractérisé en ce qu'il consiste à construire trois pyramides d'images à résolutions croissantes, une pyramide d'images basses fréquences ($I_{31}$, $I_{21}$, $I_{11}$) et deux pyramides d'images hautes fréquences suivant les directions horizontale ($I_{32}$, $I_{22}$, $I_{12}$) et verticale des images ($I_{33}$, $I_{23}$, $I_{13}$).

2. Procédé selon la revendication 1, caractérisé en ce qu'il consiste à effectuer l'analyse du mouvement à l'aide d'une décomposition hiérarchique en sous bandes de l'image analysée en conservant à chaque niveau de la décomposition la bande basse fréquence ($I_1$) et les bandes hautes fréquences ($I_2$, $I_3$) représentant respectivement les contours verticaux et horizontaux de l'image.

3. Procédé selon la revendication 1 ou 2, caractérisé en ce qu'il consiste à estimer le mouvement de chaque point de l'image courante en effectuant une mise en correspondance d'un bloc de points NxN, centré autour du point courant, avec des points homologues dans l'image précédente, la recherche du déplacement au niveau courant de résolution s'effectuant autour du déplacement calculé au niveau précédent.

4. Procédé selon la revendication 3, caractérisé en ce que l'estimation point à point du mouvement est réalisée de façon hiérarchique sur chacune des trois pyramides.

5. Procédé selon l'une quelconque des revendications 3 et 4, caractérisé en ce qu'il consiste à utiliser, pour chaque estimation et à un niveau de résolution donné, quatre vecteurs de prédiction, ces vecteurs étant obtenus par l'attribution de chaque vecteur estimation d'un point du niveau de résolution inférieur aux 16 points correspondants entourant ce point au niveau de résolution considéré.

6. Procédé selon la revendication 5, caractérisé en ce qu'il consiste pour commencer une estimation à un niveau de résolution déterminé, à utiliser quatre vecteurs de prédiction (Do) du niveau de résolution inférieur et à rechercher au voisinage de chacun des quatre vecteurs, le vecteur déplacement (Do) qui donne la différence inter image déplacée (DFD) la plus faible.

7. Procédé selon l'une quelconque des revendications précédentes, caractérisé en ce que l'estimation de mouvement est effectuée de façon indépendante sur chaque pyramide d'images hautes fréquences et en ce que l'estimation de mouvement d'une image basses fréquences d'un niveau de résolution donné est effectuée en choisissant, parmi les composantes des vecteurs estimations hautes fréquences et basses fréquences, celles qui minimisent l'erreur de recalage sur l'image basse fréquence.

8. Procédé selon la revendication 5, caractérisé en ce qu'il consiste à conserver toujours le même vecteur de prédiction dans les zones uniformes de l'image.

9. Procédé selon l'une quelconque des revendications 6 à 8, caractérisé en ce qu'il consiste à évaluer l'évolution parabolique de la différence inter image déplacée (DFD) en fonction de chaque coordonnée du vecteur mouvement et à calculer le vecteur de déplacement en fonction du minimum de cette évaluation.

**Claims**

1. Method for the hierarchical estimation of movement in a sequence of images of the type consisting of effecting a hierarchical breakdown of the image by resolution level ($I_{31}$, $I_{32}$, $I_{33}$; $I_{21}$, $I_{22}$, $I_{23}$; $I_{11}$, $I_{12}$, $I_{13}$; I), estimating a movement at the most coarse resolution level ($I_{31}$, $I_{32}$, $I_{33}$) and refining the estimation in each level as the resolution increases, characterised in that it consists of constructing three pyramids of images with increasing resolutions, one pyramid of low-frequency images ($I_{31}$, $I_{21}$, $I_{11}$) and two pyramids of high-frequency images in the horizontal ($I_{32}$, $I_{22}$, $I_{12}$) and vertical ($I_{33}$, $I_{23}$, $I_{13}$) directions of the images.

2. Method according to Claim 1, characterised in that it consists of analysing the movement by means of hierarchical breakdown into sub-bands of the analysed image, preserving at each level of the breakdown the low-frequency band ($I_1$) and the high-frequency bands ($I_2$, $I_3$) representing respectively the vertical and horizontal contours of the image.

3. Method according to Claim 1 or 2, characterised in that it consists of estimating the movement of each point in the current image by matching a block of points NxN, centred around the current point, with homologous points in the preceding image, the movement at the current resolution level being sought around the movement calculated at the previous level.

4. Method according to Claim 3, characterised in that the point to point estimation of the movement is effected hierarchically on each of the three pyramids.

5. Method according to either one of Claims 3 and 4, characterised in that it consists of using, for each estimation and at a given resolution level, four prediction vectors, these vectors being obtained by allocating each estimation vector of a point at the lower resolution level to the 16 corresponding points surrounding this point at the resolution level under consideration.

6. Method according to Claim 5, characterised in that it consists, for commencing an estimation at a given resolution level, of using four prediction vectors (Do) for the lower resolution level and seeking, in the vicinity of each of the four vectors, the movement vector (Do) which gives the lowest moved inter-image difference (DFD).

7. Method according to any one of the preceding claims, characterised in that the movement estimation is effected independently on each pyramid of high-frequency images and in that the estimation of movement of a low-frequency image of a given resolution level is effected by choosing, amongst the components of the high-frequency and low-frequency estimation vectors, those which minimise the resetting error on the low-frequency image.

8. Method according to Claim 5, characterised in that it consists of always preserving the same prediction vector in the uniform areas of the image.

9. Method according to any one of Claims 6 to 8, characterised in that it consists of evaluating the parabolic change in the moved inter-image difference (DFD) as a function of each coordinate of the movement vector and calculating the movement vector as a function of the minimum of this evaluation.

**Patentansprüche**

1. Verfahren zur hierarchischen Bewegungsabschätzung in einer Bildsequenz mit einer hierarchischen Zerlegung des Bildes durch Auflösungswerte ($I_{31}$, $I_{32}$, $I_{33}$ ; $I_{21}$, $I_{22}$, $I_{23}$ ; $I_{11}$, $I_{12}$, $I_{13}$ ; I) und einer Schätzung einer Bewegung beim gröbsten Auflösungswert ($I_{31}$, $I_{32}$, $I_{33}$) und einer Verfeinerung der Schätzung bei jedem Wert in dem Maße, wie die Auflösung ansteigt, dadurch gekennzeichnet, daß
drei Pyramiden von Bildern mit zunehmenden Auflösungen gebildet werden, eine Pyramide mit Bildern mit niedrigen Frequenzen ($I_{31}$, $I_{21}$, $I_{11}$) und zwei Pyramiden von Bildern mit hohen Frequenzen entlang der horizontalen Richtung ($I_{32}$, $I_{22}$, $I_{12}$) und der vertikalen Richtung ($I_{33}$, $I_{23}$, $I_{13}$) der Bilder.

2. Verfahren nach Anspruch 1, dadurch gekennzeichnet, daß
die Analyse der Bewegung mittels einer hierarchischen Zerlegung in Unterbänder des analysierten Bildes erfolgt, indem bei jedem Wert der Zerlegung das niedrige Frequenzband ($I_1$) und die hohen Frequenzbänder ($I_2$, $I_3$) die vertikalen bzw. die horizontalen Konturen des Bildes darstellen.

3. Verfahren nach Anspruch 1 oder 2, dadurch gekennzeichnet, daß die Bewegung jedes Punktes des laufenden Bildes geschätzt wird, indem eine Übereinstimmung eines Blocks von Punkten N x N, zentriert um den laufenden Punkt, mit den homologen Punkten in dem vorangehenden Bild hergestellt wird, wobei die Untersuchung des Versatzes beim laufenden Wert der Auflösung um dem beim vorangehenden Wert berechneten Versatz erfolgt.

4. Verfahren nach Anspruch 3, dadurch gekennzeichnet, daß
die Schätzung Punkt für Punkt der Bewegung in einer hierarchischen Weise für jede der drei Pyramiden erfolgt.

5. Verfahren nach einem der Ansprüche 3 und 4, dadurch gekennzeichnet, daß
für jede Schätzung und bei einem bestimmten Wert der Auflösung vier Voraussagevektoren verwendet werden, wobei diese Vektoren durch die Zuweisung jedes Schätzungsvektors eines Punktes des Auflösungswertes unterhalb 16 entsprechenden Punkten gewonnen werden, die den Punkt bei dem betrachteten Auflösungswert umgeben.

6. Verfahren nach Anspruch 5, dadurch gekennzeichnet, daß
für den Beginn einer Schätzung bei einem festgelegten Auflösungswert vier Voraussagevektoren (Do) für den unteren Auflösungswert verwendet werden und in der Nachbarschaft jedes der vier Vektoren der Versatzvektor (Do) untersucht wird, der die geringste Differenz zwischen versetzten Bildern (DFD) ergibt.

7. Verfahren nach einem der vorangehenden Ansprüche, dadurch gekennzeichnet, daß die Bewegungsschätzung unabhängig für jede Pyramide der Bilder mit hohen Frequenzen erfolgt und daß die Bewegungsschätzung eines Bildes mit niedrigen Frequenzen bei einem bestimmten Auflösungswert dadurch erfolgt, daß unter den Komponenten der Schätzvektoren mit hohen Frequenzen und mit niedrigen Frequenzen diejenigen ausgewählt werden, die den Ausfallfehler bei dem Bild mit niedrigen Frequenzen minimieren.

8. Verfahren nach Anspruch 5, dadurch gekennzeichnet, daß
immer derselbe Voraussagevektor in den gleichmäßigen Bereichen des Bildes gespeichert wird.

9. Verfahren nach einem der Ansprüche 6 - 8, dadurch gekennzeichnet, daß der parabelförmige Verlauf der Differenz zwischen dem verschobenen Bild (DFD) als Funktion jedes Koordinatenwertes des Bewegungsvektors ausgewertet wird und der Versatzvektor als Funktion des Minimums dieser Auswertung berechnet wird.

# FIG.1

résolution
1/4
1/2

1

(J = 2)

# FIG.2

# FIG.3

# FIG.4

filtres

colonnes · lignes

# FIG.5

# FIG.6

résolution

# FIG.7

I3.3

I3.2  I3.1  I2.3

$\frac{1}{4}$  I 2.2  I2.1  I1.3

$\frac{1}{8}$  I 1.2  I1.1

Hautes fréquences en Y

Hautes fréquences en X

Basses fréquences

Image d'origine.

I

# FIG.8

$\overrightarrow{X_p}$  $\overrightarrow{D}$  $\overrightarrow{X}$

I (t-1)  I (t)

# FIG. 9

résolution grossière

résolution fine

# FIG. 10

11

4 prédicteurs possibles

10

# FIG. 11

$\vec{dD}$

$\vec{D_0}$ : prédicteur

FIG. 12

# FIG.13

Légende
E : estimation
fusion
prédiction

# FIG.14